# EUROPÄISCHE PATENTSCHRIFT

(11) **EP 2 500 707 B1**
(45) Veröffentlichungstag und Bekanntmachung des Hinweises auf die Patenterteilung: **02.01.2019**
(21) Anmeldenummer: 12158621.8
(22) Anmeldetag: 08.03.2012
(51) Int. Cl.: G01M 15/10, G01N 1/22

(54) **Messgerät zur Abgasmessung**
Measuring device for waste gas measurement
Dispositif de mesure des gaz d'échappement

(30) Priorität: 15.03.2011 AT 1502011 U
(43) Veröffentlichungstag der Anmeldung: 19.09.2012
(73) Patentinhaber: AVL DiTest GmbH, 8020 Graz (AT)
(72) Erfinder: Bergmann, Alexander, 8052 Graz (AT)
(74) Vertreter: Patentanwälte Pinter & Weiss OG

(56) Entgegenhaltungen:
- EP-A2- 0 155 793
- EP-A2- 1 462 791
- EP-A2- 1 914 545
- EP-A2- 2 180 228
- WO-A1-00/47928
- DE-A1- 4 334 336
- DE-A1- 4 404 947
- GB-A- 190 913 611
- US-A- 789 620
- US-A- 955 500
- US-A- 2 130 030
- US-B1- 8 246 052

## Beschreibung

Die Erfindung betrifft ein Messgerät zur Abgasmessung, insbesonders zur Abgasmessung von Brennkraftmaschinen, mit einer Messkammer, die über eine Messgas-Zuleitung mit einer Abgassonde und über eine Absaugleitung mit einer Pumpe verbunden ist, sowie mit einem in der Messgas-Zuleitung angeordneten Umschaltorgan, über welches die Messkammer im Standby-Betrieb mit unbelasteter Umgebungsluft durchströmbar ist.

Derartige Messgeräte werden beispielsweise zur Prüfung und Diagnose von Kraftfahrzeugabgasen eingesetzt, wobei die eigentliche Messung in der Messkammer nach verschiedensten Verfahren funktionieren und damit verschiedenste Eigenschaften des Abgases bestimmen kann. So kann beispielsweise über Trübungsmessgeräte oder Opazimeter Rauchgas bzw. Ruß in Abgasen gemessen werden, soweit die Konzentration davon nicht zu gering wird, da dann die Genauigkeit dieser Verfahren nicht mehr ausreichend ist. Bekannt sind auch Streulichtmessverfahren, bei denen ein Lichtstrahl in das zu vermessende Abgas geleitet und der in verschiedene Richtungen gestreute Lichtanteil erfasst und ausgewertet wird. Diese Verfahren eignen sich besonders für geringe Ruß- bzw. Partikelkonzentrationen im Abgas. Auch andere bekannte Verfahren zur Abgasmessung können bei Messgeräten der eingangs genannten Art zum Einsatz kommen, wobei der prinzipielle Aufbau mit Zu- und Ableitung des Messgases und Zuführung der zur Spülung bzw. Null-Kalibrierung verwendeten unbelasteten und gegebenenfalls gefilterten Umgebungsluft stets im Wesentlichen der Gleiche ist.

Ein Problem bereitet bei allen bekannten Messgeräten der genannten Art stets der Umstand, dass insbesonders bei relativ hochdynamischen Druckschwankungen des zugeführten Messgases, wie sie insbesonders bei der Abgasmessung von Brennkraftmaschinen auftreten können, immer wieder als zeitlich begrenzte Störungen Überdruckzustände im zugeführten Messgas herrschen können, die auch durch ein zumeist vorgesehenes Puffervolumen in der Absaugleitung vor der Pumpe nicht zuverlässig abzufangen sind und im schlimmsten Fall zu einer Verschmutzung der Messkammer und sonstiger nur aufwendig zu reinigender Bauteile des Messgerätes sowie zu Messwertbeeinflussungen bzw. Störungen führen können.

Beispielsweise zeigt die EP 0155 793 A2 zeigt eine bekannte Abgasmesseinrichtung mit doppelter Luft-Verdünnung. Über einen Anschluss wird Abgas aus einem Endrohr eines Fahrzeuges entnommen. Dem Abgas wird über ein Rohr mit gefilterter Umgebungsluft verdünnt. Das verdünnte Abgas durchströmt ein Entnahmerohr zur Entnahme eines Teilstroms des bereits verdünnten Abgases. Nach dem Entnahmerohr strömt das verdünnte Abgas durch eine Venturidüse und über Auslass in die Umgebung, wobei die Strömung von einer Pumpe erzeugt wird. Der bereits einmal verdünnte Abgas-Teilstrom aus dem Entnahmerohr wird in ei nem Sekundär-Kreislauf erneut mit gereinigter, trockener Luft aus einer Quelle verdünnt und danach einem Filter zur gravimetrischen Partikelmessung und einer Messeinrichtung zur Messung des Massenstroms zugeführt. Von der Messeinrichtung wird der doppelt verdünnte Abgas-Teilstrom über Auslass in die Umgebung ausgestoßen.

Aufgabe der vorliegenden Erfindung ist es, ein Messgerät der eingangs genannten Art so zu verbessern, dass die erwähnten Nachteile der bekannten derartigen Geräte vermieden werden und dass insbesonders die beschriebenen Überdruckzustände im zugeführten Messgas beherrschbar sind und dadurch hervorgerufene Verschmutzungen der Messkammer oder sonstiger Teile des Messgerätes sowie Messwertbeeinflussungen bzw. Störungen vermieden werden.

Diese Aufgabe wird gemäß der vorliegenden Erfindung bei einem Messgerät der eingangs genannten Art dadurch gelöst, dass eine parallel zur Messkammer geschaltete Verdünnungsleitung zwischen der Umgebungsluft-Zuführleitung vor dem Umschaltorgan und der Absaugleitung vor der Pumpe vorgesehen ist. Damit wird einerseits auf sehr vorteilhafte Weise im normalen Messbetrieb eine über die Durchströmparamater der parallel zur Messkammer geschalteten Verdünnungsleitung einstellbare Verdünnung des von der Pumpe letztlich abgesaugten Gases erreicht (was Kondensation vor dem üblicherweise der Pumpe vorgeschalteten Hauptfilter verringert), und andererseits auf sehr einfache Weise ein Sicherheitsweg bei Überdruck des zugeführten Messgases geschaffen, sodass allenfalls der Hauptfilter verlegt, aber eine Verschmutzung der Messkammer wegen fehlender Durchströmung vermieden werden kann.

In der Verdünnungsleitung kann in weiters bevorzugter Ausgestaltung der Erfindung eine vorzugsweise einstellbare oder aus verschiedenen Durchflussquerschnitten auswählbare Blende vorgesehen sein, was eine einfache Einstellung des Verdünnungsgrades einerseits und eine einfache Einflussnahme auf die Parameter des Sicherheitsweges bei Überdruck andererseits erlaubt.

In weiters bevorzugter Ausgestaltung der Erfindung ist ein Differenzdruckmesser vorgesehen, der einerseits mit derVerdünnungsleitung vor der Blende und andererseits mit der Absaugleitung, nach einem hinter der Einmündung der Verdünnungsleitung vorgesehenen Hauptfilter und vor der Pumpe, verbunden ist. Diese Differenzdruckmessung dient dem Monitoring des Durchflusses durch die Messkammer bzw. zur Kontrolle der Beladung (=Verschmutzung) des Hauptfilters.

Vor der Einmündung in die Absaugleitung kann in der Verdünnungsteitung in weiterer Ausgestaltung der Erfindung ein absperrbares Schaltorgan angeordnet sein, was auf einfache Weise die Durchführung eines Dichtheitstests des Messgerätes (von der Abgassonde bis zur Pumpe) erlaubt, ohne dass die parallel geschaltete Verdünnungsleitung Einfluss nehmen könnte.

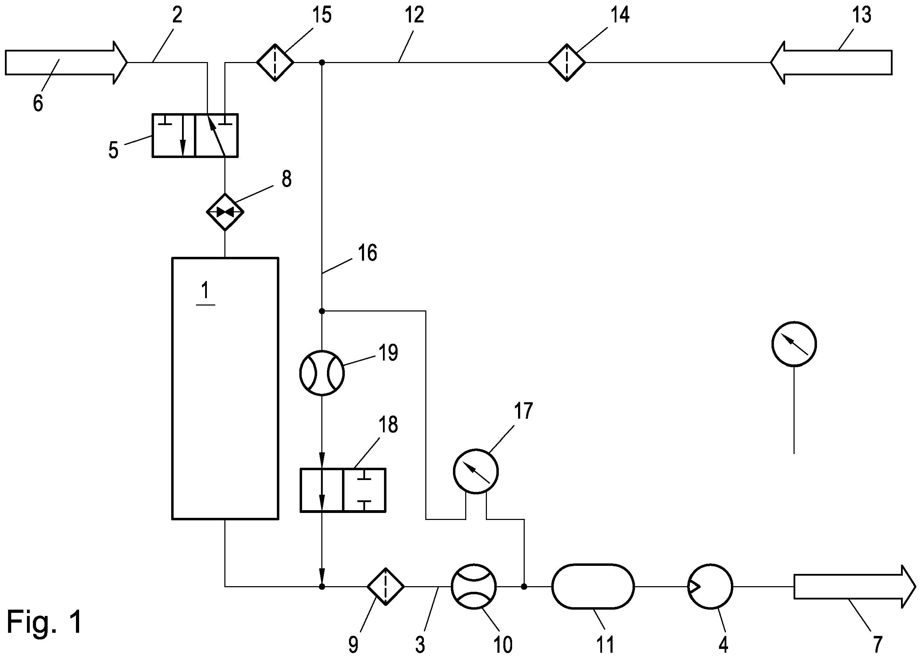

Die Erfindung wird im Folgenden noch anhand des in Fig. 1 schematisch dargestellten Ausführungsbeispiels eines entsprechenden Messgerätes näher erläutert.

Das dargestellte Messgerät dient beispielsweise zur Abgasmessung von Brennkraftmaschinen und weist eine Messkammer 1 auf, welche über eine Messgas-Zuleitung 2 mit einer hier nicht dargestellten Abgassonde (beispielsweise angeordnet im Auspuffende eines Kraftfahrzeuges) und über eine Absaugleitung 3 mit einer Pumpe 4 verbunden ist. Im normalen Messbetrieb ist das Umschaltorgan 5 in der Messgas-Zuleitung 2 in der in Fig. 1 dargestellten Stellung, womit über den Pfeil 6 zuströmendes Messgas von der Pumpe 4 durch die Messkammer 1 gesaugt und über den Pfeil 7 ausgeblasen wird.

Im Weg des Messgases ist vor der Messkammer hier noch eine zumeist vorgesehene Vorheizung 8 eingezeichnet sowie danach ein Hauptfilter 9, eine Durchflussblende 10 und ein Puffervolumen 11, wobei letzteres bis zu einem gewissen Grad den Ausgleich von Druckschwankungen erlaubt bzw. dazu dient die Druckschwankungen, generiert bei der Förderung von Messgas mittels Membranpumpen durch diese, zu reduzieren.

Das in der Messgas-Zuleitung 2 vorgesehene Umschaltorgan 5 ist weiters über eine Leitung 12 mit Umgebungsluft (Pfeil 13) verbunden, womit bei einer Umschaltung in die andere Schaltstellung Umgebungsluft durch die Messkammer gesaugt wird, die über zwei weitere Filter 14, 15 (wovon zumindest der Filter 15 als HEPA-Filter ausgeführt sein kann) möglichst weitgehend von Verunreinigungen gesäubert ist und damit zur Spülung der Messkammer im Standby-Betrieb bzw. auch zur Null-Kalibrierung der Messung dienen kann.

Zur Messkammer 1 parallel geschaltet verläuft eine Verdünnungsleitung 16 zwischen der Umgebungsluft-Zuführleitung 12 vor dem Umschaltorgan 5 bzw. Filter 15 und der Absaugleitung 3 vor der Pumpe 4. Über diese Verdünnungsleitung 16 wird damit sowohl im Messbetrieb als auch im Standby-Betrieb zusätzlich zu den die Messkammer 1 durchströmenden Gasströmen gefilterte Umgebungsluft von der Pumpe 4 angesaugt, was mögliche Kondensation vor dem Hauptfilter 9 vermindert. Vor der Einmündung der Verdünnungsleitung 16 in die Absaugleitung 3 ist ein absperrbares Schaltorgan 18 angeordnet, das im geschlossenen Zustand eine einfache Dichtheitsprüfung der Strömungswege im Messgerät zwischen Abgassonde und Pumpenausgang ermöglicht.

Weiters ist in der Verdünnungsleitung 16 auch eine vorzugsweise einstellbare oder aus verschiedenen Durchflussquerschnitten auswählbare Blende 19 vorgesehen, über welche das Verhältnis von Verdünnungsluft zum sonstigen Gasstrom einstellbar ist - über einen Differenzdruckmesser 17 kann der Durchfluss durch die Messzelle 1 bzw. auch die Beladung des Hauptfilters 9 überwacht werden.

Die Verdünnungsleitung 16 ist in der dargestellten Anordnung weiters auch als einfacher Sicherheitsweg bei Überdruck in der Messgas-Zuleitung 2 wirksam. Bei einem Überdruck im zugeführten Messgas, der über das begrenzte Fördervolumen der Pumpe 4 und die Wirkung des Puffervolumens 11 nicht mehr abgefangen werden kann, wird das Messgas vor dem Hauptfilter 9 durch das offene Schaltorgan 18 und die Blende 19 nach oben und entgegen der Richtung des Pfeiles 13 nach Außen gedrückt, womit eine ausreichende Flussgeschwindigkeit in der Messkammer 1 aufrecht gehalten und deren Verschmutzung verhindert wird - lediglich der üblicherweise leicht wechselbare Hauptfilter 9 kann so verlegt werden. Je größer der Durchfluss in der Verdünnungsleitung 16, umso weicher wird das System. Ausreichend weich beispielsweise für Anwendungen bei Abgasmessung von Brennkraftmaschinen ist ein Verhältnis von 1:1 (Verdünnungsleitung 16: Zuleitung 2)

## Patentansprüche

1. Messgerät zur Abgasmessung, insbesonders zur Abgasmessung von Brennkraftmaschinen, mit einer Messkammer (1), die über eine Messgas-Zuleitung (2) mit einer Abgassonde und über eine Absaugleitung (3) mit einer Pumpe (4) verbunden ist, sowie mit einem in der Messgas-Zuleitung (2) angeordneten Umschaltorgan (5), über welches die Messkammer (1) im Standby-Betrieb mit unbelasteter Umgebungsluft durchströmbar ist, **dadurch gekennzeichnet, dass** eine parallel zur Messkammer (1) geschaltete Verdünnungsleitung (16) zwischen der Umgebungsluft-Zuführleitung (12) vor dem Umschaltorgan (5) und der Absaugleitung (3) vor der Pumpe (4) vorgesehen ist.

2. Messgerät nach Anspruch 1, **dadurch gekennzeichnet, dass** in der Verdünnungsleitung (16) eine vorzugsweise einstellbare oder aus verschiedenen Durchflussquerschnitten auswählbare Blende (19) vorgesehen ist.

3. Messgerät nach Anspruch 1 oder 2, **dadurch gekennzeichnet, dass** ein Differenzdruckmesser (17) vorgesehen ist, der einerseits mit der Verdünnungsleitung (16) vor der Blende (19) und andererseits mit der Absaugleitung (3), nach einem hinter der Einmündung der Verdünnungsleitung (16) vorgesehenen Hauptfilter (9) und vor der Pumpe (4), verbunden ist.

4. Messgerät nach einem der Ansprüche 1 bis 3, **dadurch gekennzeichnet, dass** in der Verdünnungsleitung (16) vor der Einmündung in die Absaugleitung (3) ein absperrbares Schaltorgan (18) angeordnet ist.

## Claims

1. Measuring device for measuring exhaust gas, in particular for measuring exhaust gas from internal combustion engines, comprising a measurement chamber (1) which is connected to an exhaust gas sensor via a measurement-gas supply line (2) and is connected to a pump (4) via a suction line (3), and comprising a switchover element (5) which is arranged in the measurement-gas supply line (2) and by means of which unpolluted ambient air can flow through the measurement chamber (1) in standby mode, **characterised in that** a dilution line (16) connected in parallel with the measurement chamber (1) is provided between the ambient-air supply line (12), which is upstream of the switchover element (5), and the suction line (3), which is upstream of the pump (4).

2. Measuring device according to claim 1, **characterised in that** an orifice plate (19) is provided in the dilution line (16) and is preferably adjustable or can be selected from various through-flow cross sections.

3. Measuring device according to either claim 1 or claim 2, **characterised in that** a differential pressure gauge (17) is provided that is connected both to the dilution line (16), which is upstream of the orifice plate (19), and to the suction line (3), which is downstream of a main filter (9) which is provided downstream of the opening of the dilution line (16), and upstream of the pump (4).

4. Measuring device according to any of claims 1 to 3, **characterised in that** a switching element (18), which can be shut off, is arranged in the dilution line (16) upstream of the point at which said dilution line opens into the suction line (3).

## Revendications

1. Appareil de mesure de gaz d'échappement, en particulier de mesure de gaz d'échappement de moteurs à combustion interne, comportant une chambre de mesure (1) reliée à une sonde de gaz d'échappement par une conduite de gaz mesuré (2) et à une pompe (4) par une conduite d'évacuation (3), ainsi qu'un organe de commutation (5) qui est agencé dans la conduite de gaz mesuré (2) et par le biais duquel la chambre de mesure (1) en mode d'attente peut être traversée par de l'air ambiant non pollué, **caractérisé en ce qu'**une conduite de dilution (16) montée en parallèle avec la chambre de mesure (1) est prévue entre la conduite d'alimentation en air ambiant (12) en amont de l'organe de commutation (5) et la conduite d'évacuation (3) en amont de la pompe (4).

2. Appareil de mesure selon la revendication 1, **caractérisé en ce qu'**un obturateur (19), de préférence réglable ou sélectionnable parmi différentes section de débit, est prévu dans la conduite de dilution (16).

3. Appareil de mesure selon la revendication 1 ou 2, **caractérisé en ce qu'**un manomètre différentiel (17) est prévu, lequel est relié d'un côté à la conduite de dilution (16) en amont de l'obturateur (19) et de l'autre côté à la conduite d'évacuation (3), en aval d'un filtre principal (9), prévu en aval de l'embouchure de la conduite de dilution (16), et en amont de la pompe (4).

4. Appareil de mesure selon l'une des revendications 1 à 3, **caractérisé en ce qu'**un organe de commutation (18) verrouillable est agencé dans la conduite de dilution (16) en amont de la jonction débouchant dans la conduite d'évacuation (3).
